# EUROPÄISCHE PATENTSCHRIFT

(11) **EP 4 100 447 B1**
(45) Veröffentlichungstag und Bekanntmachung des Hinweises auf die Patenterteilung: **08.04.2026**
(21) Anmeldenummer: 20838354.7
(22) Anmeldetag: 08.12.2020
(51) Int. Cl.: C08C 4/00, C08C 1/04

(54) **VERFAHREN ZUR TRENNUNG VON POLYISOPREN UND ANDEREN APOLAREN WERTSTOFFEN AUS PFLANZLICHEN ROHSTOFFEN**
METHOD FOR SEPARATING POLYISOPRENE AND OTHER APOLAR VALUABLE SUBSTANCES FROM VEGETABLE FEEDSTOCK
PROCÉDÉ DE SÉPARATION DU POLYISOPRÈNE ET D'AUTRES MATIÈRES VALORISABLES APOLAIRES À PARTIR DE MATIÈRES PREMIÈRES VÉGÉTALES

(30) Priorität: 10.12.2019 DE 102019133785
(43) Veröffentlichungstag der Anmeldung: 14.12.2022
(73) Patentinhaber: ZOZ GmbH, 57482 Wenden (DE); Fraunhofer-Gesellschaft zur Förderung der angewandten Forschung eingetragener Verein, 80686 München (DE)
(72) Erfinder: ZOZ, Henning, 57482 Wenden (DE); BENZ, Hans Ulrich, 57482 Wenden (DE); MÜLLER, Boje, 48431 Rheine (DE); PRÜFER, Dirk, 48145 Münster (DE); SCHULZE GRONOVER, Christian, 48149 Münster (DE); BENNINGHAUS, Vincent, 45891 Gelsenkirchen (DE); EPPING, Janina, 48149 Münster (DE)
(74) Vertreter: Weeg, Thomas
(86) Internationale Anmeldenummer: PCT/EP2020/085098
(87) Internationale Veröffentlichungsnummer: WO 2021/116113

(56) Entgegenhaltungen:
- DE-A1- 102007 047 764
- VAN BEILLEN JAN B ET AL: "Gunyule and Russian dandelion as alternative sources of natural rubber", CRITICAL REVIEWS IN BIOTECHNOLOGY, CRC PRESS, BOCA RATON, FL, US, vol. 27, no. 4, 1 January 2007 (2007-01-01), pages 217 - 231, XP009112629, ISSN: 0738-8551, DOI: 10.1080/07388550701775927
- VAN BEILEN J B ET AL: "Establishment of new crops for the production of natural rubber", TRENDS IN BIOTECHNOLOGY, ELSEVIER PUBLICATIONS, CAMBRIDGE, GB, vol. 25, no. 11, 1 November 2007 (2007-11-01), pages 522 - 529, XP026862919, ISSN: 0167-7799, [retrieved on 20071022]

## Beschreibung

Die vorliegende Erfindung bezieht sich auf ein Verfahren zur Trennung von Polyisopren und anderen apolaren Wertstoffen aus pflanzlichen Rohstoffen nach dem Oberbegriff des Anspruchs 1.

Naturkautschuk hat als Hauptbestandteil ein Polymerisat aus Isopren-Einheiten, und zwar das cis-1,4-Polyisopren. Der Naturkautschuk wir heute vornehmlich aus dem Milchsaft des Kautschukbaums gewonnen, was allerdings sehr arbeitsaufwendig ist und lange Transportwege zum Verarbeiter nach sich zieht. Zudem schwanken die Preise relativ stark je nach Witterung und Verfügbarkeit des Rohstoffs in den Anbauländern.

Aus der Schrift DE 10 2007 047 764 A1 ist ein Prozess zur Entfernung unerwünschter Begleitstoffe aus Pflanzenproteinen bekannt. Die Extraktion erfolgt mit einem Extraktionsmittel, wobei ein Pflanzenproteinextrakt erhalten wird. Nach Zugabe eines anorganischen Adsorbermaterials zu dem Pflanzenproteinextrakt werden die unerwünschten Begleitstoffe an das anorganische Adsorbermaterial gebunden.

Aus der Schrift DE 10 2013 107 279 A1 ist ein Verfahren bekannt, Naturkautschuk und damit Polyisopren aus dem Wurzelmaterial von Löwenzahn als pflanzlichem Rohstoff zu gewinnen. Nach einem biologischen Zersetzungsprozess als erster Vorbehandlung wird das Wurzelmaterial einem mechanischen Zerkleinerungsprozess ausgesetzt, bei dem das Wurzelmaterial zerkleinert und der Naturkautschuk freigesetzt wird. Dabei sollen sich die Naturkautschukpartikel agglomerieren. Danach kann die in Lösung befindliche Biomasse von den Naturkautschuk-Agglomeraten getrennt und isoliert werden. Es wird nur am Rand erwähnt, dass der mechanische Zerkleinerungsprozess mit einer rotierenden Mahlkörpermühle erfolgen kann, ohne dass sich nähere Angaben dazu finden, wie eine solche Mahlkörpermühle auszugestalten ist.

Pflanzen mit einem geringeren Kautschukgehalt oder mit einem niedermolekularen Kautschuk werden bisher wegen der geringen Effizienz oder des problematischen Aggregatzustands des zähflüssigen Isopren-Produkts bisher nicht zur Polyisopren-Gewinnung genutzt. Solche Pflanzen werden teilweise in anderen Anbauregionen als der Kautschukbaum angebaut, so dass bei einer Verbreiterung der Pflanzenbasis für die Rohstoffgewinnung das Ernterisiko für den Kautschukbedarf sinkt. Auch werden einzelne kautschukhaltige Pflanzen bereits für andere Wertschöpfungsketten angebaut, bei denen die kautschukhaltige Biomasse bisher aber als Abfall anfällt, weil es an technischen Verfahren fehlt, den Naturkautschuk wirtschaftlich verfügbar zu machen. Dadurch geht eine erhebliche Biomassemenge verloren, die mit einem geeigneten Herstellungsverfahren für die Herstellung von Polyisopren nutzbar sein könnte. Bei der Erschließung von Naturkautschuk/Polyisopren aus pflanzlichen Rohstoffen ist es bisher unbeachtet geblieben, dass auch die Abscheidung anderer apolarer Wertstoffe aus Pflanzen im Rahmen eines Verfahrens zur Aufarbeitung pflanzlicher Rohstoffe möglich ist.

Demgemäß ist es die Aufgabe der vorliegenden Erfindung, ein Verfahren zu schaffen, mit dem es möglich ist, auf eine technisch einfachere Weise aus Pflanzen mit einem geringeren Kautschukgehalt oder mit einem niedermolekularen Kautschuk Polyisopren zu gewinnen.

Die Aufgabe wird für ein gattungsgemäßes Verfahren gelöst, indem vor oder während der mechanischen Bearbeitung in der Nassphase ein Adsorbermaterial in das Mahlgutgemisch zugegeben wird.

Die erste Vorbehandlung der pflanzlichen Rohstoffe kann in einem Kochen, Waschen, Zerkleinern und/oder einer chemischen und/oder biologischen Zersetzung der Pflanzen bestehen, durch die die Zellen der pflanzlichen Rohstoffe für den nachfolgenden Aufschluss durch die schlagende, schneidende und/oder reibende mechanische Bearbeitung in der Nassphase vorbereitet werden.

Bei der schlagenden, schneidenden und/oder reibenden mechanischen Bearbeitung der pflanzlichen Rohstoffe in einer Nassphase wird Naturkautschuk aus der umgebenden Biomasse herausgelöst und schwimmt in der flüssigen Phase. Nachfolgend ist nur vom Naturkautschuk die Rede, damit ist das Polyisopren gemeint, das von der übrigen Biomasse der pflanzlichen Rohstoffe getrennt werden soll. In diesem Zustand neigt der Naturkautschuk dazu, zu agglomerieren. Der Agglomerationsprozess nimmt jedoch Zeit in Anspruch, während der das Mahlgutgemisch in den Behältern für die mechanische Bearbeitung vorgehalten werden muss. Dadurch vergrößern und verteuern sich die Volumina der für die Bearbeitung der pflanzlichen Rohstoffe benötigten Vorrichtungen. Zudem ist es schwierig, einen optimalen Zeitpunkt zu finden, die mechanische Bearbeitung zu beenden. Möglicherweise hat sich noch nicht aller Naturkautschuk aus der anhaftenden Biomasse herausgelöst und ist an der Oberfläche der des mechanisch bearbeiteten Mahlgutgemischs aufgeschwommen und mit anderem Naturkautschuk agglomeriert, dann würde eine Beendigung der mechanischen Bearbeitung zu diesem Zeitpunkt zu einer geringeren Ausbeute von Naturkautschuk führen. Andererseits kann die Beendigung der mechanischen Bearbeitung aber auch zu lange herausgezögert werden, weil bereits agglomeriertes Naturkautschuk durch eine fortgesetzte mechanische Bearbeitung wieder voneinander getrennt und aufgelöst werden könnte, wodurch dieses in der nachfolgenden Trennung des Naturkautschuks aus der Nassphase nicht mehr ohne einen unvertretbaren Aufwand trennbar ist. Bei den bekannten Verfahren überschneiden sich die Abläufe unkontrolliert, dass sich einerseits noch nicht aller Naturkautschuk von der umgebenden Biomasse abgelöst hat und andererseits bereits agglomeriertes Naturkautschuk durch die fortgesetzte Bearbeitung schon wieder zerstört wird.

Aus dieser Betrachtung wird deutlich, dass es vorteilhaft ist, das Ablösen des Naturkautschuks von der umgebenden Biomasse und die Agglomeration des Naturkautschuks während der mechanischen Bearbeitung in der Nassphase zu beschleunigen und zu unterstützen. Durch die Beschleunigung und Unterstützung der Ablösung und Agglomeration sinkt die Verweilzeit des Mahlgutgemischs in der Anlage zur mechanischen Bearbeitung in der Nassphase, diese kann daher bei gleichem Durchsatz kleiner und damit kostengünstiger ausgelegt werden. Gleichzeitig steigt aber auch die Ausbeute an Naturkautschuk aus den bearbeiteten pflanzlichen Rohstoffen, weil die zeitliche Überschneidung des noch-Herauslösens des Naturkautschuks aus der Biomasse und der bereits eintretenden Zerstörung der schon gebildeten Agglomerate verringert oder sogar ganz vermieden wird. Dadurch kann der optimale Zeitpunkt zur Beendigung der mechanischen Bearbeitung der pflanzlichen Rohstoffe in der Nassphase genauer bestimmt werden, wodurch ebenfalls die Verfahrenseffizienz steigt.

Der pflanzliche Rohstoff, aus dem der Naturkautschuk gewonnen werden solle, kann aus der Gruppe der Pflanzenfamilien Apocynaceae, Asteraceae, Euphorbiaceae, Moraceae oder Kreuzungen mit Latexpflanzen aus der Gruppe von Agoseris glauca, Apocynum venetum, Chrysothamnus graveolens, Chrysothamnus nauseosus, Chrysothamnus viscidiflorus, Funtumia elastica, Parthenium argentatum, Scorzonera acanthoclada, Scorzonera albicaulis, Scorzonera divaricate, Scorzonera hissaricata, Scorzonera racemosa, Scorzonera tau-saghyz, Scorzonera tragapogonoides, Scorzonera turkestania, Scorzonera virgate, Solidago canadensis scabra, Solidago fistulosa, Solidago leavenworthii, Solidago rigida, Sonchus oleraceus, Taraxacum brevicorniculatum, Taraxacum hybernum, Taraxacum koksaghyz, Taraxacum megalorrhizon, Taraxacum officinale, Cichorium intybus L., Musaceae insbesondere mit den Gattungen Musa, Ensete und Musella oder entsprechender Hybride gewählt werden. Aus diesen Pflanzenfamilien gewonnener Kautschuk oder mechanisch aufbereitete Teile dieser Pflanzen, die so aufbereitet sind, dass sich Polyisopren an das in diesen Pflanzen enthaltene Polyisopren anlagern kann, sind aber auch als Adsorbermaterial verwendbar.

Apolare Synthesekautschuke wie z.B. Acrylic Rubber (ACM), Butadiene Rubber (BR), Butyl Rubber (IIR), Chlorosulfonated Polyethylene (CSM)/ Hypalon, Ethylene Propylene Diene Monomer (EPDM), Fluoroelastomers (FKM)/ Viton, Isoprene Rubber (IR), Nitrile Rubber (NBR), Perfluoroelastomer (FFKM), Polychloroprene (CR)/ Neoprene, Polysulfide Rubber (PSR), Silicone Rubber (SiR), Styrene Butadiene Rubber (SBR) können ebenfalls als Adsorbermaterial verwendet werden. Des weiteren können pflanzliche/tierische Öle und Fette (z.B. Distelöl, Erdnussöl, Hanföl, Heringsöl, Kürbiskernöl, Mandelöl, Maiskeimöl, Mohnöl, Schweineschmalz, Rindertalg, Rizinusöl, Sesamöl, Sojaöl, Sonnenblumenöl, Traubenkernöl, Walnussöl, Weizenkeimöl, Olivenöl, Rapsöl, Palmöl, Kokosöl, Leinöl Kokosfett) oder Mineralöle (z.B. Weißöle) genutzt werden. Beispiele für technische Adsorber sind Ultra-X-Tex, UltraSorb und QuickSorb.

Das Ablösen des Naturkautschuks von der umgebenden Biomasse und die Agglomeration des Naturkautschuks während der mechanischen Bearbeitung in der Nassphase wird beschleunigt und unterstützt, indem während der mechanischen Bearbeitung in der Nassphase ein Adsorbermaterial dem Mahlgutgemisch zugegeben wird. Die Moleküle des Naturkautschuks bleiben bei der Adsorption auf der Oberfläche des Adsorbermaterials haften und reichern sich auf dessen Oberfläche an. Der Naturkautschuk als Adsorbat bildet jedoch mit der Oberfläche des Adsorbermaterials keine chemische Bindung aus, sondern haftet durch schwächere Kräfte ähnlich der Adhäsion. Die Kräfte, die die Anhaftung verursachen, sind keine chemischen Bindungen, sondern nur Van-der-Waals-Kräfte. Diese Form der Adsorption wird exakter physikalische Adsorption oder Physisorption genannt. Im Gegensatz zur Chemisorption findet dabei keine chemische Reaktion zwischen dem Naturkautschuk und dem Adsorbermaterial statt. Die Adsorptionsenergie liegt bei der Physisorption im Bereich von 4 bis 40 kJ/mol. Chemische Bindungen innerhalb eines adsorbierten Teilchens bleiben bestehen, werden jedoch polarisiert.

Das Adsorbermaterial mit dem adsorbierten Naturkautschuk kann als Komposit-Isopren genutzt werden. Es ist auch möglich, niedermolekulares Isopren sowie andere Lipide mit gängigen Verfahren abzutrennen. Die gängigen Trennverfahren können auf thermischen, mechanischen oder chemischen Wirkprinzipien beruhen.

Die Adsorption ist reversibel, da die Teilchen unter Einsatz von ähnlich viel Energie, die bei der Anhaftung an der Oberfläche frei geworden ist, die Oberfläche wieder verlassen können. Diese Reaktionen werden in der Regel nicht durch Übergangszustände gehemmt. Die Aktivierungsenergie der Reaktion ist daher gleich der Adsorptionsenergie. Adsorbierte Teilchen haben keinen fixen Bindungsort an der Oberfläche, verweilen nicht an der Stelle, wo sie adsorbiert wurden, sondern bewegen sich frei entlang der Oberfläche. Die Lage des Gleichgewichts hängt von den Eigenschaften und Größe der Oberfläche, der Eigenschaften und dem Druck beziehungsweise der Konzentration des Adsorptivs sowie von der Temperatur ab.

Durch die Zugabe des Adsorbermaterials in das Mahlgutgemisch während der mechanischen Bearbeitung in der Nassphase können Polyisopren und andere wertvolle Lipide mit einer hohen Effektivität aus den pflanzlichen Rohstoffen angereichert und getrennt werden. In der Nassphase kann sich der aus der umgebenden Biomasse herausgelöste Naturkautschuk leichter auf das Adsorbermaterial zubewegen und daran anhaften. Durch die Nutzung der Nassphase wird die Adsorption also erheblich unterstützt. Bei der Adsorption werden keine organischen Lösungsmittel genutzt. Als Reststoff entsteht ein pflanzlicher Nass-Schlamm, der als Futtermittelzusatz, Biogas-Substrat, Düngemittel oder zur Aufreinigung von polaren Substanzen wie Kohlehydrate, wie beispielsweise Inulin, genutzt werden kann. Der aus den pflanzlichen Rohstoffen mit dem Adsorbermaterial angereicherte Naturkautschuk kann mittels aus dem Stand der Technik bekannter Verfahren zur Kautschukaufbereitung weiterverarbeitet werden. So ist beispielsweise die Aufarbeitung von Taraxacum kok-saghyz in der Patentliteratur umfänglich beschrieben. Diese Aufarbeitungsverfahren können auch verwendet werden, um das aus den pflanzlichen Rohstoffen adsorbierte Naturkautschuk zusammen mit dem jeweils eingesetzten Adsorbermaterial aufzuarbeiten.

Wenn in dieser Beschreibung von einem Mahlgutgemisch die Rede ist, so ist damit der pflanzliche Rohstoff in der Flüssigphase gemeint, der der mechanischen Bearbeitung unterzogen wird. Auch wenn aus Gründen der Vereinfachung von einem Mahlgutgemisch die Rede ist, so ist die mechanische Bearbeitung deshalb keinesfalls auf eine rein mahlende mechanische Bearbeitung beschränkt. Als alternative oder zusätzliche mechanische Bearbeitungen kommen beispielsweise auch schneidende, quetschende oder schlagende Bearbeitungen in Betracht. Demgemäß ist technisch der in dieser Beschreibung verwendete Begriff der Mahlkörpermühle nicht auf eine ausschließlich mit Mahlkörpern mahlende Mühle beschränkt. Als Vorrichtungen zur mechanischen Bearbeitung des Mahlgutgemischs in der Flüssigphase kommen auch Walzenmühlen, Planetenmühlen, Prallmühlen, Schneidmühlen, Planetenwalzen-Extruder, Doppelschnecken-Extruder oder Häcksler, Cutter oder Shredder allein oder in einer beliebigen Kombination untereinander in Betracht, die in dieser Beschreibung vereinfachend als Mahlkörpermühle als Sammelbegriff bezeichnet sind.

Nach einer Ausgestaltung der Erfindung können neben der Adsorption von Polyisopren auch andere wertvolle apolare Substanzen aus pflanzlichen Rohstoffen, insbesondere Lipide, wie Triterpenoide, Polyphenole, Polyphenole, Flavonoide, und ungesättigte Fettsäuren als Alternative zur bisherigen Extraktion mit organischen Lösungsmitteln oder anderer, weniger umweltfreundlichen Verfahren, adsorbiert werden, die für die Verwertung in der Pharmaindustrie brauchbar sind. Die Zugabe des Adsorbermaterials ermöglicht es also, zusätzlich zum Naturkautschuk noch weitere wertvolle Inhaltsstoffe von pflanzlichen Rohstoffen aus dem Mahlgutgemisch auf der Stufe der mechanischen Bearbeitung in der Nassphase abzutrennen. Durch die bloße Adhäsion können auch die apolaren Substanzen später nach der mechanischen Bearbeitung mit einem vergleichsweise geringen Aufwand wieder vom Adsorbermaterial und dem Naturkautschuk getrennt und separat verfügbar gemacht werden.

Nach einer Ausgestaltung der Erfindung erfolgt die mechanische Bearbeitung in einer im Durchlaufbetrieb betriebenen Mahlkörpermühle. Anders als eine Bearbeitung im Batch-Verfahren bietet eine im Durchlaufbetrieb betriebene Mahlköpermühle eine höhere Durchsatzleistung, einen geringeren Personalaufwand und eine bessere Anpassbarkeit von Prozessparametern an sich ändernde Anforderungen an den Prozess der mechanischen Bearbeitung. Eine im Durchlaufbetrieb betriebene Mahlkörpermühle arbeitet wesentlich effizienter, weil die für die Be- und Entladung der Vorrichtungen notwendigen Unterbrechungszeiten in der mechanischen Bearbeitung entfallen. Das Adsorbermaterial kann gut in den Mahlraum einer im Durchlaufbetrieb betriebenen Mahlkörpermühle zugefördert werden. Dabei kann auch die zugeförderte Menge des Adsorbermaterials leicht an den konkreten Bedarf angepasst werden.

Nach einer Ausgestaltung der Erfindung ist die Oberfläche des Adsorbermaterials, auf der die Adsorption stattfindet, die Oberfläche eines Feststoffes oder die Oberfläche einer Flüssigkeit, und bei dem Adsorbermaterial handelt es sich um einen apolare Adsorber. Ein Feststoff oder eine Flüssigkeit kann leicht dem Mahlgutgemisch zugefördert werden. Das Adsorbermaterial kann dem Mahlgutgemisch schon zugegeben werden, bevor es in den Mahlraum der Mahlkörpermühle befördert wird, oder es wird dem Mahlgutgemisch während der mechanischen Bearbeitung im Mahlraum zugegeben. Bei dem apolaren Adsorber kann es sich um Stoffe wie beispielsweise Naturkautschuk, synthetischen Kautschuk, pflanzliche oder tierische Öle und Fette oder Mineralöle oder technische Adsorber wie Aktivkohle, Graphit oder Polymer-Adsorber handeln.

Nach einer Ausgestaltung der Erfindung wird das feste und/oder flüssige Adsorbermaterial kontinuierlich in den Mahlraum der Mahlkörpermühle abgegeben. Durch die kontinuierliche Zugabe in den Mahlraum ist trotz des kontinuierlichen Durchlaufs eines Mahlgutgemischs dafür gesorgt, dass kein Verdünnungseffekt in der Konzentration des Adsorbermaterials im Mahlgutgemisch durch den konstanten Zu- und Ablauf des Mahlgutgemisches im Mahlraum eintritt. Der Anteil des im Mahlgutgemisch befindlichen Adsorbermaterials kann im Mahlraum zumindest annähernd konstant gehalten werden, so dass eine gleichbleibend hohe Ausbeute von Naturkautschuk sichergestellt ist.

Nach einer Ausgestaltung der Erfindung erfolgt die Trennung des Naturkautschuks und/oder des Adsorbermaterials von der Nassphase über mechanische Trennverfahren. Als mechanische Trennverfahren kommen beispielsweise das Sieben, eine Filtration, Flotation und/oder das Windsichten in Betracht. Die mechanischen Trennverfahren sind kostengünstig und zuverlässig.

Nach einer Ausgestaltung der Erfindung erfolgt die mechanische Bearbeitung des Mahlgutgemisches in der Nassphase in einer Mahlkörpermühle. Für den Fall dieser konkreten Ausgestaltung der Erfindung ist der Begriff der Mahlkörpermühle auf genau diesen Mühlentyp beschränkt. Die Mahlkörpermühle kann bevorzugt in einem kontinuierlichen Betrieb betrieben werden, indem der Trommel der Mahlkörpermühle laufend ein Mahlgutgemisch mit der Zuführvorrichtung zugeführt wird, das Mahlgutgemisch den Mahlraum entlang der Drehachse durchläuft und am Ende mit der Abfördervorrichtung aus der Trommel herausbefördert wird. Das Mahlgutgemisch enthält zumindest teilweise eine Flüssigkeit, mit der die pflanzlichen Rohstoffe besser durch die Trommel befördert und innerhalb der Trommel gleichmäßiger verteilt werden. Die Flüssigkeit ist auch erforderlich, um es dem Naturkautschuk nach seiner Ablösung von der übrigen Biomasse zu ermöglichen, miteinander zu Flocken zu agglomerieren.

Durch die kontinuierliche Drehbewegung der Trommel werden die Mahlkörper in den jeweiligen Abteilen der Drehung der Trommel gegeneinander bewegt und der Drehrichtung folgend ständig ein Stück weit aufwärts bewegt. Indem die Mahlkörper bei der ständigen Bewegung an den zwischen den Mahlkörpern befindlichen pflanzlichen Rohstoffen vorbeischeren und an diesen reiben, werden diese aufgeschlossen. Wenn die Prozessparameter vom Kaskaden- in den Kataraktmodus ein-gestellt werden, fallen die Mahlkörper von oben zusätzlich auf das Mahlgutgemisch herab. Durch die dabei auf die pflanzlichen Rohstoffe einwirkende Aufprallkraft werden diese zusätzlich aufgeschlossen. Durch die Zahl der Mahlkörper und die Drehgeschwindigkeit der Trommel ergeben sich in einem Zeitintervall entsprechend viele Stöße, die auf die in den Abteilen befindlichen pflanzlichen Rohstoffe einwirken und bei denen die Zellstruktur der pflanzlichen Rohstoffe aufgeschlossen wird. Dabei wird der in den pflanzlichen Rohstoffen befindliche Naturkautschuk freigesetzt und kann in der Flüssigkeit, die einen Bestandteil des Mahlgutgemisches bildet, aufschwimmen und sich flockenartig agglomerieren. Als agglomerierte Flocken kann der Naturkautschuk leicht von den übrigen Bestandteilen des Mahlgutgemisches separiert werden.

Wenn der Mahlraum in der Trommel der Mahlkörpermühle in mehrere Abteile unterteilt ist, werden in Durchlaufrichtung des Mahlgutgemischs durch die Trommel aufeinanderfolgende Zonen geschaffen, in denen die pflanzlichen Rohstoffe unterschiedlich intensiv bearbeitet werden können. So ist es möglich, beispielsweise im ersten Abteil eine intensive Bearbeitung für einen ersten Aufschluss vorzusehen, beispielsweise durch eine entsprechende Bestückung dieses Abteils mit entsprechenden Mahlgutkörpern, während die Bearbeitung in den nachfolgenden Abteilen schonender erfolgen kann, um den Naturkautschuk von den übrigen Pflanzenbestandteilen abzutrennen und die Agglomeration zu fördern. Die Trommel insgesamt weist eine Länge und eine Anzahl darin ausgebildeter Abteile auf, die erforderlich ist, um die pflanzlichen Rohstoffe so weit aufzuschließen, dass sich der Naturkautschuk agglomeriert. Die Abteile können unterschiedlich lang ausgestaltet sein, um auch dadurch die Verweildauer der pflanzlichen Rohstoffe in einem Abteil zu beeinflussen. So kann sich an ein kurzes Abteil, in dem die pflanzlichen Rohstoffe mit schweren Mahlkörpern intensiver beaufschlagt werden, ein längeres Abteil anschließen, in dem keine oder nur wenige Mahlkörper vorhanden sind, in denen die pflanzlichen Rohstoffe im Wesentlichen nur in der Flüssigkeit des Mahlgutgemisches bewegt und gespült werden. Die Zwischenwände können auch entlang der Drehachse in der Trommel verlagerbar montiert sein, um die Länge der Abteile verändern zu können.

Wenn die Zwischenwände Durchlassöffnungen aufweisen, durch die das Mahl-gutgemisch von einem Abteil in ein benachbartes Abteil hindurchtreten kann, ergibt sich ein selbsttätiger Durchlauf des Mahlgutgemisches durch die Trommel. Insbesondere durch die Zuförderung eines Mahlgutgemisches an einer Seite der Trommel entsteht in dem Mahlraum eine Strömung, mit der das Mahlgutgemisch jeweils von einem stromaufwärts gelegenen Abteil zum nächstgelegenen stromabwärts befindlichen Abteil überläuft, bis es die Abgabevorrichtung zur Abförderung des im Mahlraum bearbeiteten Mahlgutgemisches erreicht. Die Durchlassöffnungen sind bevorzugt so bemessen, dass sie die in einem Abteil befindlichen Mahlkörper zurückhalten, das Mahlgutgemisch aber durch die Durchlassöffnungen hindurchfließen kann. Es können aber auch einzelne oder mehrere Durchlassöffnungen so gestaltet sein, dass sie Mahlkörper durchlassen. Wenn solche Durchlassöffnungen aber in einem Abstand zur Außenwand der Abteile weiter nach innen versetzt zur Drehachse hin angeordnet sind, bleibt die Zahl der Mahlkörper, die durch eine solche Durchlassöffnung tatsächlich in das benachbarte Abteil gelangen, gering, insbesondere, wenn sich in diesem Abteil eher wenige Mahlkörper befinden. Die Durchlassöffnungen können in ihrer Größe verstellbar ausgebildet sein, um sie an verschiedene pflanzliche Rohstoffe und ihre stofflichen Besonderheiten anpassen zu können, oder es sind Drosselkörper auf die Durchlassöffnungen aufsetzbar, aus denen sich unterschiedlich große oder geformte Durchlassöffnungen ergeben. Durchlassöffnungen können auch als eine Art Sieb ausgestaltet sein, um damit auch größere Bestandteile der pflanzlichen Rohstoffe oder Verschmutzungen aus dem Mahlgutgemisch qualitativ zu selektieren. Die Durchlassöffnungen beeinflussen mit ihrer Form, Position und Größe auch die Durchgangsmenge und -geschwindigkeit des Mahlgutgemisches durch die Trommel. Sie sind so bemessen, gestaltet und positioniert, dass sich eine für den Aufschluss der pflanzlichen Rohstoffe geeignete Durchgangsgeschwindigkeit einstellt, bei der der zu Flocken agglomerierte Naturkautschuk im letzten Abteil der Trommel ankommt oder sich dort bildet und von dort aus der Trommel abgefördert werden kann.

Auch kann vorgesehen sein, dass der Motor mit einer Vorrichtung versehen ist, über die die Drehzahl der Trommel veränderlich einstellbar ist. Wenn die Trommel schneller rotiert, ergeben sich mehr Schläge von Mahlkörpern auf die pflanzlichen Rohstoffe in einem Zeitintervall, bei einer geringeren Drehzahl verringert sich die Zahl der Schläge im Zeitintervall. Die Schläge, die die Mahlkörper auf die pflanzlichen Rohstoffe ausüben, die sich im Mahlgutgemisch befinden, sind auch abhängig von der Trommeldrehzahl unterschiedlich heftig. Durch die Veränderung der Trommeldrehzahl kann also die Bearbeitungsintensität der pflanzlichen Rohstoffe gezielt verändert werden. Stellt sich heraus, dass der Naturkautschuk während der laufenden Bearbeitung eines Mahlgutgemisches zu früh agglomeriert, kann die Trommeldrehzahl verringert werden, um die Agglomeration zeitlich zu dehnen. Umgekehrt kann die Trommeldrehzahl beschleunigt werden, wenn der Naturkautschuk zu spät agglomeriert. Die Vorrichtung zur Drehzahlveränderung kann die für den Motor verfügbare Leistung beeinflussen, um dadurch die Drehzahl des Motors zu verändern, mit dem die Trommel angetrieben wird, oder die Übersetzung der Motor-drehzahl wird über ein Getriebe verändert, das zwischen dem Motor und der Trommel angeordnet ist.

Zusammenfassend ist es mit der Mahlkörpermühle möglich, den Aufschluss pflanzlicher Rohstoffe in der Trommel zur Gewinnung von Naturkautschuk durch eine entsprechende Ausgestaltung und Einstellung der vorstehend beschriebenen variablen Komponenten der Mahlkörpermühle so zu gestalten, dass sich im letzten Abteil der Trommel der agglomerierte Naturkautschuk findet. Der Aufschluss ist schonend genug einstellbar, um den Naturkautschuk nicht im Verlauf der Bearbeitung zu zerstören, aber auch aggressiv genug, um den Naturkautschuk aus den übrigen Pflanzenbestandteilen so weit auszulösen, dass dieser in der Mahlgutmischung agglomerieren kann. Bei auftretenden Variationen in den pflanzlichen Rohstoffen kann die Mahlkörpermühle auch durch Veränderungen der veränderbaren Prozessparameter so angepasst werden, dass auch bei veränderten pflanzlichen Rohstoffen der Naturkautschuk in agglomerierter Form der Trommel entnommen werden kann. Zusätzlich wird die Agglomeration des Naturkautschuks durch die Zugabe des Adsorbermaterials in das Mahlgutgemisch beschleunigt und unterstützt.

Weitere Merkmale der Erfindung ergeben sich aus den Ansprüchen, den Figuren und der gegenständlichen Beschreibung. Alle vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder aber in Alleinstellung verwendbar.

Anhand eines bevorzugten Ausführungsbeispiels sowie unter Bezugnahme auf die beigefügten Zeichnungen wird nachstehend näher erläutert, wie Naturkautschuk aus einem pflanzlichen Rohstoff im Rahmen einer mechanischen Bearbeitung in der Nassphase herausgelöst wird.

Es zeigen:
- Fig. 1:: eine Seitenansicht einer Mahlkörpermühle,
- Fig. 2:: eine Schnittansicht durch die in Fig. 1 dargestellte Trommel,
- Fig. 3:: eine vergrößerte Schnittansicht durch eine Zuführvorrichtung,
- Fig. 4:: eine Ansicht auf eine Trommel mit einer ansteigenden Drehachse,
- Fig. 5:: eine Ansicht auf eine Zwischenwand,
- Fig. 6:: eine zuförderseitige Ansicht auf die Mahlkörpermühle,
- Fig. 7:: eine abförderseitige Ansicht auf die Mahlkörpermühle,
- Fig. 8:: eine Querschnittsansicht durch eine Trommel mit einem Aufnahmeraum, und
- Fig. 9:: ein Verfahrensablaufplan.

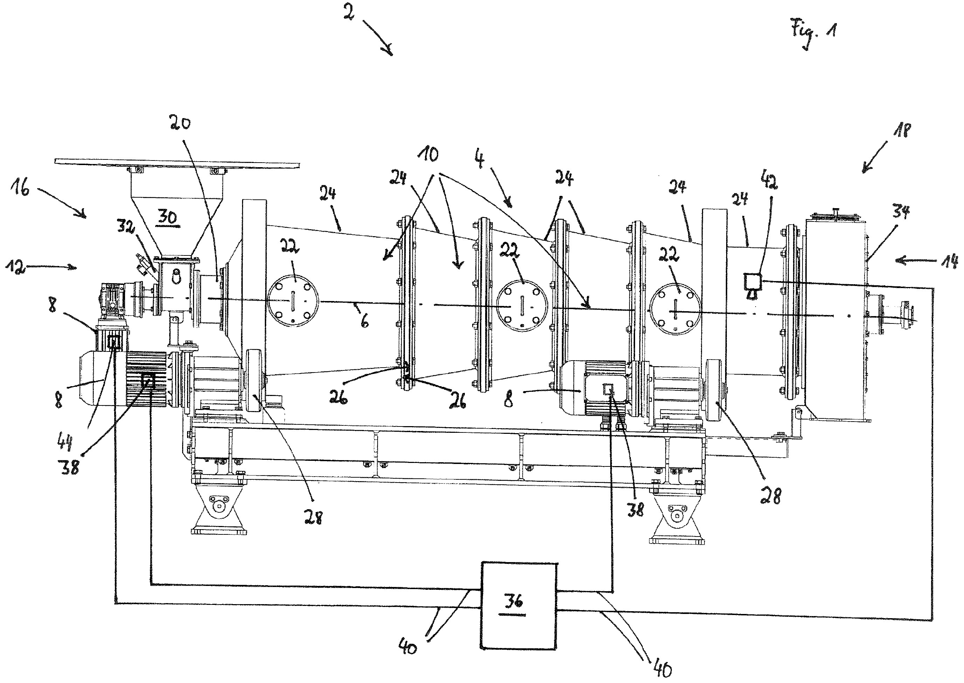

In Fig. 1 ist eine Seitenansicht einer Mahlkörpermühle 2 gezeigt. Die Mahlkörpermühle 2 weist eine Trommel 4 auf, durch die ein Mahlgutgemisch hindurchbefördert wird, um den in einem pflanzlichen Rohstoff enthaltenen Naturkautschuk aus diesem herauszulösen und den Naturkautschuk zu agglomerieren, so dass er als Agglomerat leicht dem Mahlgutgemisch entnommen und von diesem separiert werden kann.

Die Trommel 4 ist um eine Drehachse 6 drehbar gelagert. Drehachse 6 kann als echte Welle ausgebildet sein, sie kann aber auch nur durch die Art und Weise der Lagerung der Trommel 4 vorgegeben sein. Die Trommel 4 wird über die beiden im Ausführungsbeispiel gezeigten Motoren 8 in eine Drehbewegung versetzt. Innerhalb der Trommel 4 befindet sich ein Mahlraum 10, in dem das Mahlgutgemisch von Mahlkörpern bearbeitet wird, die sich im Mahlraum 10 befinden. Die Mahlkörper sind in den Figuren nicht dargestellt.

Die Trommel 4 verfügt über eine erste Stirnseite 12, von der aus das Mahlgutgemisch dem Mahlraum 10 zugeführt wird. Nach dem Durchlauf verlässt das Mahlgutgemisch den Mahlraum 10 wieder über die Abgabevorrichtung 18, die sich im Bereich der zweiten Stirnseite 14 befindet. Das Mahlgutgemisch wird über eine gesonderte Zuführvorrichtung 16 dem Mahlraum 10 durch eine Drehdurchführung 20 zugeführt. Auch im Bereich der Abgabevorrichtung 18 kann eine Drehdurchführung vorgesehen sein.

Um Mahlkörper in den Mahlraum 10 einfüllen und wieder entnehmen zu können, befinden sich in der Wandung der Trommel 4 eine Anzahl von Öffnungen 22. Die Öffnungen 22 können einem jeweiligen Abteil innerhalb des Mahlraums 10 zugeordnet sein.

Im Ausführungsbeispiel ist die Trommel 4 aus einer Anzahl von 6 Rohrsegmenten 24 zusammengesetzt. Jedes Rohrsegment 24 verfügt über stirnseitige Flanschflächen 26, die kongruent zu den Flanschflächen 26 anderer Rohrsegmente 24 ausgebildet sind. Durch einfaches aufeinandersetzten der Flanschflächen 26 können so beliebige Rohrsegmente 24 in einer ebenfalls grundsätzlich beliebigen Orientierung zu einer Trommel 4 zusammengesetzt werden. Die Rohrsegmente 24 können unterschiedliche Längen entlang der Drehachse 6 und Durchmesser aufweisen. Die Durchmesser der Rohrsegmente 24 können auch über ihre Länge in Richtung der Drehachse 6 variieren.

Die Trommel 4 ist im Ausführungsbeispiel an ihrem äußeren Umfang auf Laufrollen 28 abgestützt. Die beiden in Fig. 1 gezeigten Laufrollen 28 sind über die Motoren 8 angetrieben. Die Laufrollen 28 laufen im Ausführungsbeispiel auf den Außenkanten der Flanschflächen 26 ab, so dass diese eine umlaufende Rollbahn bilden.

Das Mahlgutgemisch kann dem Mahlraum 10 über den Zuführbehälter 30 zugeführt werden. Dazu wird das Mahlgutgemisch von oben in den Zuführbehälter 30 eingefüllt. Von dort wird es dann über die Drehdurchführung 20 dem Mahlraum 10 zugeführt. Der Zuführbehälter 30 verfügt im Ausführungsbeispiel über eine zusätzliche Zuführleitung 32, über die Flüssigkeiten oder Gase dem Mahlgutgemisch zugesetzt werden können. Durch die Anordnung der Zuführleitung auf der Zuführseite der Trommel 4 ist es möglich, das Mahlgutgemisch zusätzlich zu verflüssigen, aufzulockern oder - wenn das durch die Zuführleitungen 32 beförderte Medium unter hohem Druck oder mit einer hohen Temperatur in die Zuführvorrichtung 16 eingeleitet wird - die biologischen Rohstoffe zusätzlich aufschließen. So können die Zuführleitungen 32 beispielsweise über eine Dampfdüse oder ein Sprühventil eine Flüssigkeit zuführen, die die Zellstrukturen der pflanzlichen Rohstoffe durch mechanische Einwirkungen und/oder thermisch aufschließt.

Die Abgabevorrichtung 18 kann mit einer Stirnwand 34 versehen sein, die die Abgabevorrichtung 18 begrenzt.

Die Arbeitsprozesse, die mit der Mahlkörpermühle 2 ausgeführt werden, können über eine Steuerung 36 eingestellt und geregelt werden. Die Steuerung 36 ist mit den Vorrichtungen 38 verbunden, über die die Drehzahl der Trommel 4 veränderlich einstellbar ist. Bei der Vorrichtung 38 kann es sich um eine Leistungsregelung für den Motor 8 handeln. Es sind aber auch andere Ausgestaltungen für die Vorrichtung 38 möglich, wie beispielsweise ein Planeten- oder Variator-Getriebe, mit dem die Drehgeschwindigkeit der Trommel 4 veränderlich einstellbar ist.

Die Steuerung 36 ist mit dem Vorrichtungen 38 als ein Beispiel für eine Drehzahlregelung, dem Aktor 44 als Ein-Aus-Schalter oder Drehzahlregler für die Zuführvorrichtung 16 sowie einer Kamera 42 als ein Beispiel für einen Sensor über entsprechende Verbindungsleitungen 40 verbunden. Die Verbindungsleitungen 40 können als Verbindungskabel ausgeführt sein, es sind aber auch andere Verbindungstypen möglich, wie beispielsweise eine drahtlose Verbindung über Funk, über Lichtwellenleiter oder andere Medien zur Übermittlung von Daten.

In dem in Fig. 1 dargestellten Ausführungsbeispiel ist die Trommel 4 über insgesamt vier Laufrollen 28 abgestützt, von denen die beiden im Vordergrund dargestellten Laufrollen 28 über jeweils einen Motor 8 angetrieben sind. Je nach Länge und Gewicht der Trommel 4 können aber auch noch zusätzliche Laufrollen 28 vorgesehen sein. Es ist auch möglich, noch mehr oder nur eine einzige Laufrolle 28 motorisch anzutreiben.

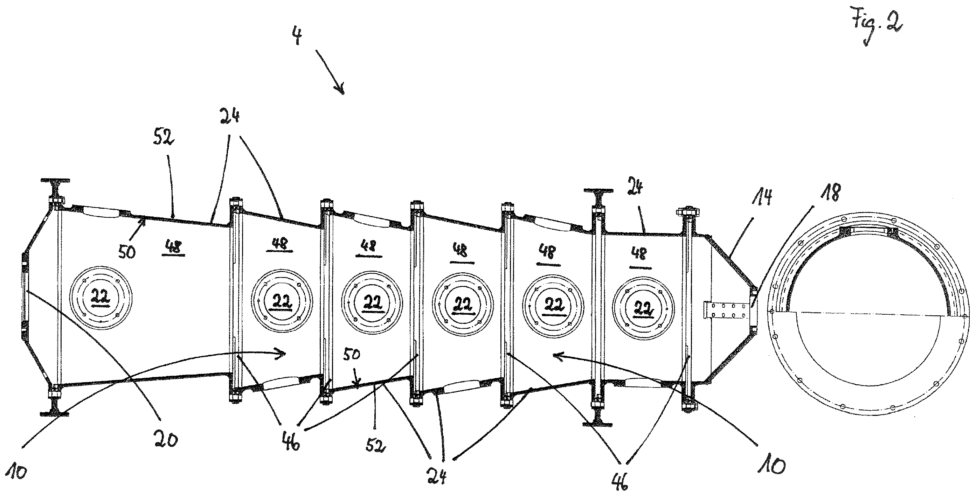

In Fig. 2 ist eine Schnittansicht durch die in Fig. 1 dargestellte Trommel 4 gezeigt. In der Schnittansicht sind insgesamt 6 Zwischenwände 46 erkennbar, die den Mahlraum 10 in sieben Abteile 48 unterteilen. In jedem der Abteile 48 können Mahlkörper angeordnet sein, wobei die Anzahl, das Gewicht, die Form und die Größe der Mahlkörper zwischen den einzelnen Abteilen 48 variieren können. Die Auswahl der jeweils in ein Abteil 48 einzufüllenden Mahlkörper hat einen Einfluss auf den Aufschluss der biologischen Rohstoffe, die Loslösung des Naturkautschuks aus den biologischen Rohstoffen sowie auf die Agglomeration dieses Naturkautschuks.

In der in Fig. 2 gezeigten Schnittansicht ist erkennbar, dass die Innenflächen 50 der Außenwände 52 nicht planparallel zur Drehachse 6 ausgebildet sind, sondern eine konische Grundform aufweisen. Über den Anstellwinkel der Außenwände 52 beziehungsweise der Innenflächen 50 zur Drehachse 6 ist es möglich, die Durchflussgeschwindigkeit des Mahlgutgemisches durch die Abteile 48 und den Mahlraum 10 insgesamt zu beeinflussen. Während die Wandung mit der Innenfläche 50 des ersten Rohrsegments 24 einen Anstellwinkel zur Drehachse 6 von 85 Grad aufweist, ist die Innenfläche 50 des zweiten Rohrsegments 24 um 79,5 Grad angestellt. Selbstverständlich können auch davon abweichende Anstellwinkel gewählt werden. Auch andere nicht-zylindrische Grundformen der Rohrsegmente 24 können gewählt werden.

Die Rohrsegmente 24 weisen dabei eine geeignete Länge auf, um in dem zugehörigen Abteil 48 eine geeignete Bearbeitung der pflanzlichen Rohstoffe ausführen zu können. Die Zahl, die Länge, die Durchmesser, die Form der Rohrsegmente, die zu einer Trommel 4 zusammengesetzt sind, können dabei vom Fachmann geeignet gestaltet und ausgewählt werden.

Die Flanschflächen 26 der Rohrsegmente 24 können über Verbindungselemente miteinander verbunden sein, wie beispielweise eine Anzahl von Schrauben mit gekonterten Schraubmuttern oder Schraubbolzen.

In der Schnittansicht in Fig. 2 ist gut erkennbar, dass der Mahlraum 10 im Bereich der zweiten Stirnseite 14 und somit an seinem stromabwärts gelegenen Ende eine konisch zulaufende Verengung zur Abgabevorrichtung 18 hin aufweist. Die dargestellte Verengung ist gut dazu geeignet, auf der Oberfläche des Mahlgutgemisches aufschwimmende Flocken von agglomeriertem Naturkautschuk abzuskimmen. Die Ausförderung kann erfolgen, indem entweder verstärkt ein Mahlgutgemisch dem Mahlraum 10 zugefördert wird, wodurch ein Schwemmimpuls im Mahlraum 10 erzeugt wird, und/oder die Drehachse 6 der Trommel 4 am zuführseitigen Ende angehoben und/oder am abgabeseitigen Ende abgesenkt wird, wobei dann die Flocken aus dem Mahlraum 10 ausgespült werden, ohne dass dabei erhöhte Anteile der übrigen pflanzlichen Rohstoffe mit ausgeschwemmt werden. Die Fraktion des Mahlgutgemisches, die keine nennenswerte Menge von Naturkautschuk mehr erhält, kann danach aus dem letzten Abteil 48 abgefördert werden, wobei dann die jeweiligen Fraktionen von der Abgabevorrichtung 18 getrennt werden können, indem sie in verschiedene Abführbehälter abgefördert werden. Es ist natürlich auch möglich, das Mahlgutgemisch insgesamt aus dem Mahlraum 10 abzufördern, ohne dabei gesondert den agglomerierten Naturkautschuk mit der Mahlkörpermühle 2 abzuskimmen.

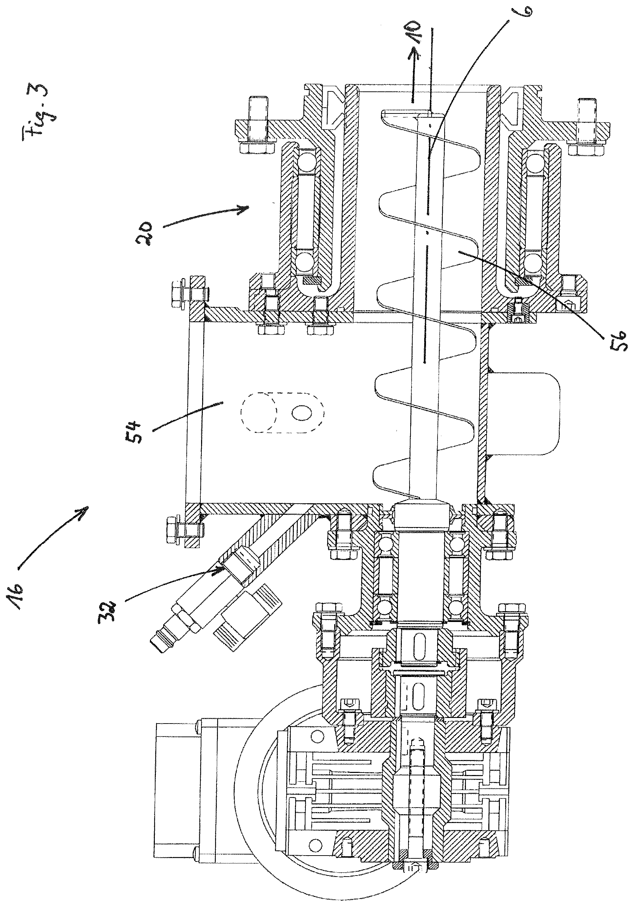

Die Fig. 3 zeigt eine vergrößerte Schnittansicht der Zuführvorrichtung 16. Zur Zuführung des Mahlgutgemisches verfügt die Zuführvorrichtung 16 über einen Anschlussstutzen 54, an den der Zuführbehälter 30 anschließbar ist. Im Bereich des Anschlussstutzens 54 befindet sich auch die Zuführleitung 32. In der Zuführvorrichtung 16 befindet sich als eine antreibbare Zwangszuführung 56 eine Förderschnecke, die durch die Drehdurchführung 20 hindurchreicht und das über den Anschlussstutzen 54 zugeförderte Mahlgutgemisch in den Mahlraum 10 abfördert. Die Schneckenbleche der Förderschnecke drücken die pflanzlichen Rohstoffe zuverlässig in den Mahlraum 10 hinein. Sie verhindern gleichzeitig, dass Mahlkörper, die bei der Rotation der Trommel 4 im Mahlraum 10 bewegt werden, in die Zuführvorrichtung 16 eindringen können. Auch wird eine Rückströmung des Mahlgutgemisches in die Zuführvorrichtung 16 über die Zwangszuführung 56 verhindert. Die Zwangszuführung 56 ist koaxial zur Drehachse 6 der Trommel 4 angeordnet.

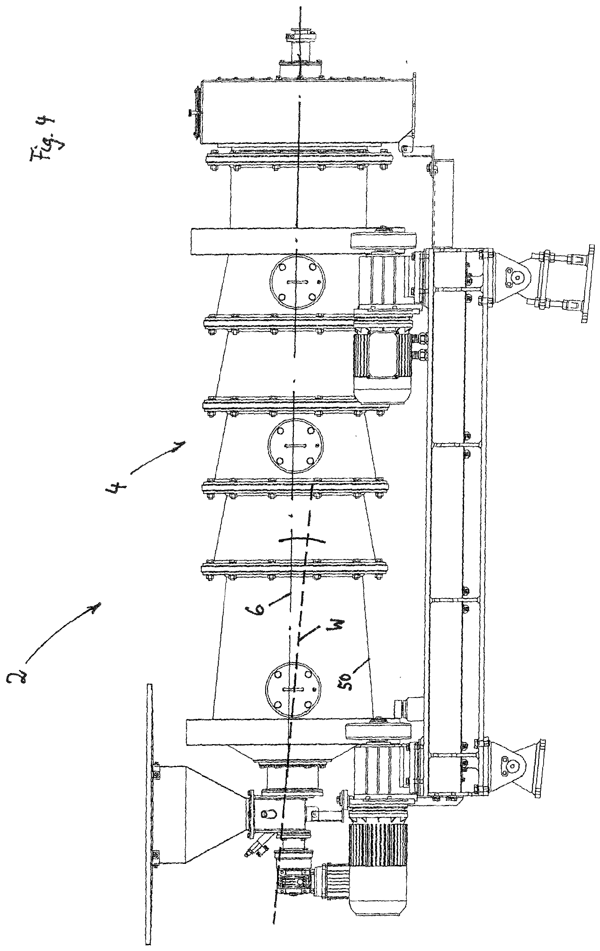

In Fig. 4 ist eine Mahlkörpermühle 2 gezeigt, bei der die Drehachse 6 der Trommel 4 zur Waagerechten W angehoben ist. Da dadurch auch die Innenflächen 50 der Rohrsegmente 24 in Förderrichtung entlang der Drehachse 6 nach rechts gegenüber der Waagerechten W ansteigen, wird in einer solchen Winkellage der Trommel 4 naturgemäß die Fördergeschwindigkeit, mit der das Mahlgutgemisch durch den Mahlraum 10 hindurchläuft, verringert. Andersherum ist es vorstellbar, dass bei einer Winkellage der Drehachse 6, bei der diese in Förderrichtung zur Waagerechten abfällt, die Fördergeschwindigkeit des Mahlgutgemisches durch den Mahlraum 10 gesteigert wird. Im Ausführungsbeispiel ist die Trommel 4 auf einem Rahmen gehalten, der seinerseits über Drehlager auf dem Boden abgestützt ist. Zur Veränderung der räumlichen Lage der Drehachse 6 können mechanische Stellmittel vorgesehen sein, es ist aber auch möglich, den Rahmen durch motorische Stellantriebe wie beispielsweise einen Hubzylinder an einer oder beiden Seiten anzuheben oder abzusenken.

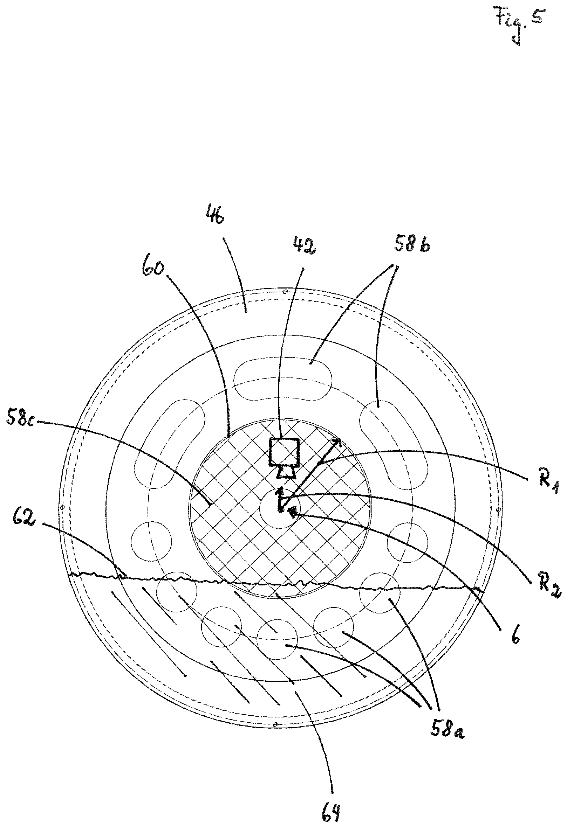

In Fig. 5 ist eine stirnseitige Ansicht auf eine Zwischenwand 46 dargestellt. Die Zwischenwand 46 verfügt über eine Anzahl von Durchlassöffnungen 58, durch die das Mahlgutgemisch von einem Abteil 48 zum benachbarten stromabwärtsgelegenen Abteil 48 hindurchfließen kann. In dem in Fig. 5 gezeigten Ausführungsbeispiel haben die Durchlassöffnungen 58a, 58b und 58c unterschiedliche Formen und Größen. Während die Durchlassöffnungen 58a von ihrer Form und Größe so bemessen sind, dass sie die in einem Abteil befindlichen Mahlkörper zurückhalten, sind die Durchlassöffnungen 58b von ihrer Form und Größe her so bemessen, dass durch sie Mahlkörper auch in ein benachbartes Abteil gelangen können.

In der in Fig. 5 dargestellten Zwischenwand 46 ist die Durchlassöffnung 58c als eine Ausnehmung 60 ausgestaltet, deren Radius R₁ in zumindest einem Teil des von der Ausnehmung 60 abgedeckten Kreisbogen größer ist als der durch den Radius R₂ bestimmten Außenumfang der Drehachse 6 im Bereich der entsprechenden Zwischenwand 46. In dem in Fig. 5 dargestellten Ausführungsbeispiel einer Zwischenwand 45 ist die Ausnehmung 60 mit einem Gitter versehen, um den Durchtritt von Mahlkörpern zu vermeiden. Wenn das in Fig. 5 gezeigte Gitter aber abweichend vom Ausführungsbeispiel weggelassen wird, ist es möglich, Sensoren 42 entlang der Drehachse 6 durch eines oder mehrere Abteile 48 zu bewegen. In Fig. 5 ist erkennbar, dass die Kamera als Sensor 42 benachbart zur Drehachse 6 im Mahlraum 10 angeordnet ist. Bei einer durch die Wellenlinie 62 angedeuteten Befüllung des Mahlraums 10 mit einem Mahlgutgemisch 64 ist der Sensor 42 in einem Abstand zum Mahlgutgemisch 64 angeordnet, in dem eine Beschädigung bzw. Verschmutzung des Sensors 42 wenig wahrscheinlich ist.

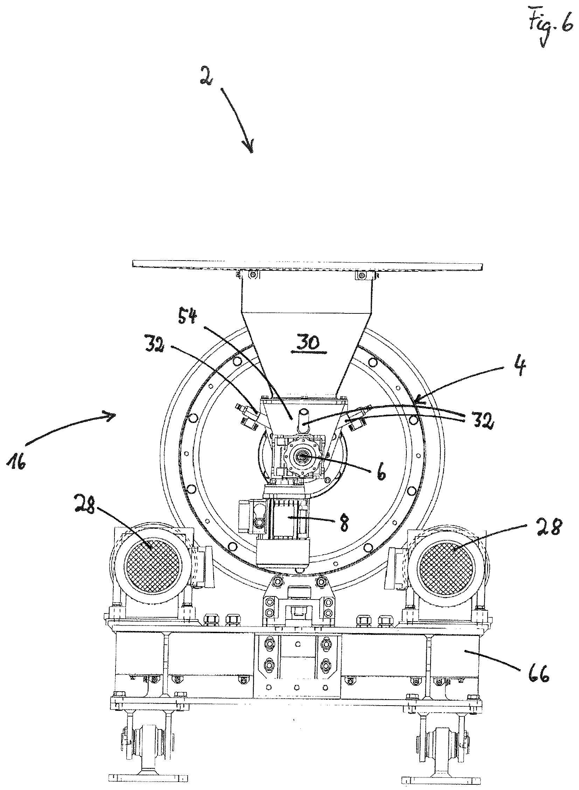

In Fig. 6 ist eine zuförderseitige Ansicht auf die Mahlkörpermühle 2 gezeigt. Aus dieser Ansicht ist die runde Umfangsform der Trommel 4 gut erkennbar. Auch ist die Zuführvorrichtung 16 mit dem trichterförmigen Zuführbehälter 30, dem darunter befindlichen Anschlussstutzen 54 sowie den mehreren Zuführleitungen 32 erkennbar. In der Stirnansicht ist auch die Drehachse 6 erkennbar, wobei die Drehachse 6 hier das Drehlager der Zwangszuführung 56 zeigt, die durch einen gesonderten Motor 8 angetrieben ist. In dieser Ansicht ist auch gut erkennbar, dass die Trommel 4 über die Laufrollen auf dem Rahmen 66 gehalten ist.

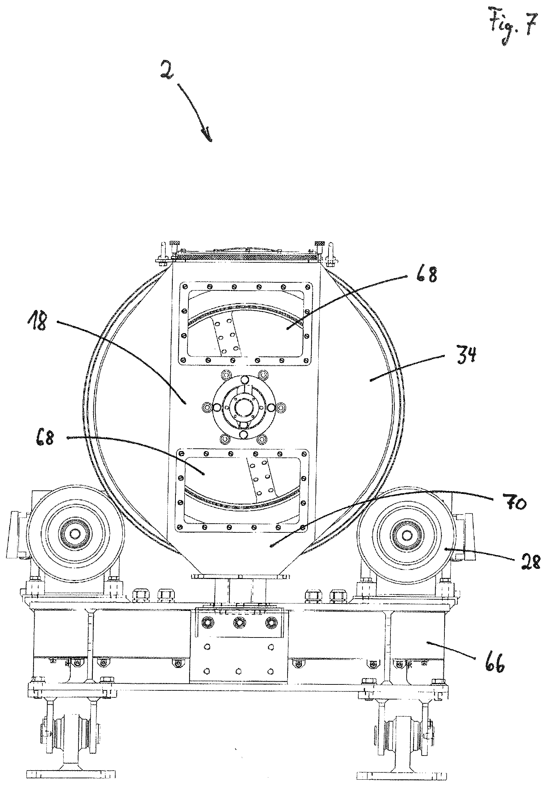

In Fig. 7 ist eine abförderseitige Ansicht auf die Mahlkörpermühle 2 dargestellt. In dieser Ansicht sind die Kontrollfenster 68 erkennbar, die in die Stirnwand 34 eingelassen sind, um durch die Kontrollfenster optisch prüfen zu können, ob sich der in den biologischen Rohstoffen enthaltene Naturkautschuk im letzten Abteil 48 des Mahlraums 10 zu Flocken agglomeriert hat.

Das über die Abgabevorrichtung 18 aus dem Mahlraum 10 abgeförderte Mahlgutgemisch 64 kann über einen Ausförderstutzen 70 an nachgeordnete Separier- und Reinigungsvorrichtungen weitergeleitet werden.

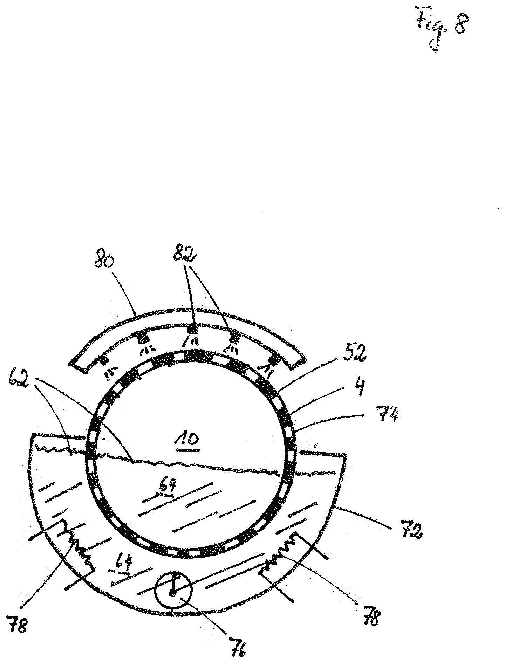

In Fig. 8 ist eine Querschnittsansicht durch eine Trommel 4 mit einem Aufnah-meraum 72 gezeigt. Die Außenwand 52 der Trommel 4 ist im Ausführungsbeispiel als Lochblech gestaltet, so dass das Mahlgutgemisch 64 vom Mahlraum 10 im Inneren der Trommel 4 durch die Öffnungen 74 im Lochblech nach außen in den Aufnahmeraum 72 hindurchtreten kann. Die Öffnungen 74 können so gestaltet sein, dass Mahlkörper aus dem Mahlraum 10 durch sie hindurch in den Aufnahmeraum 72 eintreten können, oder sie sind so gestaltet, dass das verhindert wird. Der Aufnahmeraum 72 kann dazu genutzt werden, die im Mahlgutgemisch 64 enthaltenen pflanzlichen Rohstoffe zu waschen, zu kochen und/oder Bestandteile des Mahlgutgemischs 64 zu trennen und abzufördern. Dafür können entsprechende Prozesswerkzeuge im Aufnahmeraum 72 angeordnet sein. Im Ausführungsbeispiel ist eine Förderschnecke 76 gezeigt, mit der Sediment, das sich am Boden des Aufnahmeraums 72 ansammelt, abgefördert werden kann. Es sind weiter Heizungen 78 gezeigt, mit denen das Mahlgutgemisch 64 aufgeheizt werden kann, beispielsweise um dieses zum Kochen zu bringen.

Oberhalb der Trommel 4 ist in der Fig. 8 noch ein den Umfang der Trommel 4 teilweise umfassender Mantel 80 dargestellt, an dem Düsen 82 angeordnet sind. Mit den Düsen 82 kann von außen durch die Öffnungen 74 in der Außenwand 52 der Trommel 4 hindurch eine Flüssigkeit, ein Gas oder heißer Dampf in den Mahlraum 10 gespritzt werden. In dem Mantel 80 können auch Dosiermittel zur Zugabe von Feststoffen in den Mahlraum vorgesehen sein, die dem Mahlgutgemisch zugesetzt werden, um die Ablösung und Trennung der bei der Bearbeitung frei werdenden Polyisoprene und andere apolare Werkstoffe zu unterstützen.

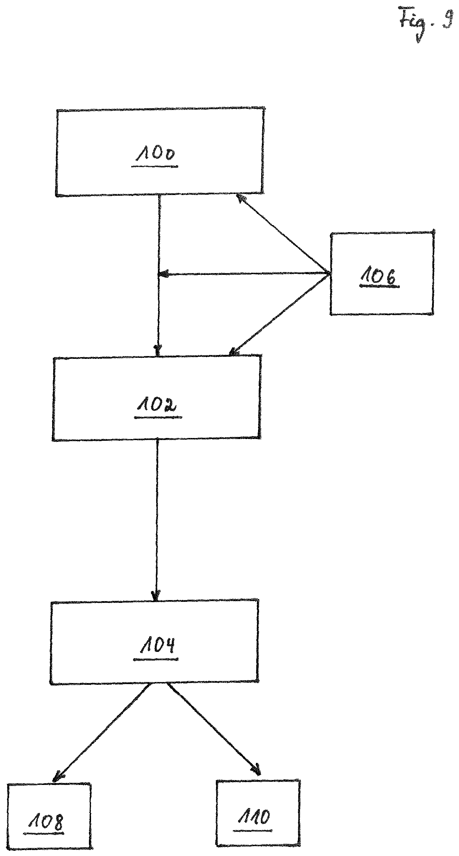

Die Fig. 9 zeigt einen Verfahrensablaufplan. In der ersten Vorbehandlung 100 werden die pflanzlichen Rohstoffe für den nachfolgenden Verfahrensschritt vor- und aufbereitet. Auf die Vorbehandlung 100 folgt die mechanische Bearbeitung 102 der pflanzlichen Rohstoffe. Dabei sind die pflanzlichen Rohstoffe in einer Nassphase einer schlagenden, schneidenden und/oder reibenden mechanischen Bearbeitung unterworfen. Die mechanische Bearbeitung 102 kann beispielsweise in einer Mahlkörpermühle 2 erfolgen, wie sie vorstehend beschrieben ist. Damit der Naturkautschuk bei der Trennung im Verfahrensschritt 104 besser aus dem übrigen Mahlgutgemisch abgetrennt werden kann, wird dem Mahlgutgemisch vor oder während der mechanischen Bearbeitung 102 ein Adsorbermaterial 106 zugegeben. Das Adsorbermaterial 106 kann dabei dem pflanzlichen Rohstoff schon vor oder während der Vorbehandlung 100 zugegeben werden, die Zugabe erfolgt nach der Vorbehandlung 100, aber vor der mechanischen Bearbeitung 102, oder das Adsorbermaterial 106 wird dem Mahlgutgemisch während der mechanischen Bearbeitung zugegeben. Der aus dem pflanzlichen Rohstoff durch die mechanische Bearbeitung 102 herausgelöste Naturkautschuk lagert sich in der flüssigen Phase des Mahlgutgemisches an das Adsorbermaterial 106 an. Bei der Trennung 104 kann das Adsorbermaterial 106 zusammen mit dem daran anhaftenden Naturkautschuk aus dem pflanzlichen Rohstoff als Charge 108 von dem übrigen Mahlgutgemisch 110 zur weiteren Verarbeitung getrennt werden.

Die Erfindung ist nicht auf die vorstehenden Ausführungsbeispiele beschränkt.

## Patentansprüche

1. Verfahren zur Trennung von Polyisopren aus pflanzlichen Rohstoffen, mit einer ersten Vorbehandlung (100) der pflanzlichen Rohstoffe, einer der Vorbehandlung (100) folgenden schlagenden, schneidenden und/oder reibenden mechanischen Bearbeitung (102) der pflanzlichen Rohstoffe in einer Nassphase, bei der in den bearbeiteten pflanzlichen Rohstoffen enthaltenes Polyisopren aus den pflanzlichen Rohstoffen herausgelöst wird, und einer auf die mechanische Bearbeitung (102) folgenden Trennung (104) des Polyisoprens aus der Nassphase, **dadurch gekennzeichnet, dass** vor oder während der mechanischen Bearbeitung (102) in der Nassphase ein Adsorbermaterial (106) in das Mahlgutgemisch zugegeben wird.

2. Verfahren nach Anspruch 1, **dadurch gekennzeichnet, dass** neben dem Polyisopren auch andere apolare Wertstoffe aus den pflanzlichen Rohstoffen getrennt werden.

3. Verfahren nach Anspruch 1 oder 2, **dadurch gekennzeichnet, dass** die mechanische Bearbeitung (102) in einer im Durchlaufbetrieb betriebenen Mahlkörpermühle (2) erfolgt.

4. Verfahren nach einem der vorhergehenden Ansprüche, **dadurch gekennzeichnet, dass** die Oberfläche des Adsorbermaterials (106), auf der die Adsorption stattfindet, die Oberfläche eines Feststoffes oder die Oberfläche einer Flüssigkeit ist, und es sich bei dem Adsorbermaterial (106) um einen apolare Adsorber handelt.

5. Verfahren nach einem der vorhergehenden Ansprüche 3 oder 4, **dadurch gekennzeichnet, dass** das feste und/oder flüssige Adsorbermaterial (106) kontinuierlich in den Mahlraum (10) der Mahlkörpermühle (2) abgegeben wird.

6. Verfahren nach einem der vorhergehenden Ansprüche, **dadurch gekennzeichnet, dass** die Trennung (104) des Naturkautschuks und/oder des Adsorbermaterials (106) von der Nassphase über mechanische Trennverfahren erfolgt.

7. Verfahren nach einem der vorhergehenden Ansprüche, **dadurch gekennzeichnet, dass** die mechanische Bearbeitung (102) des Mahlgutgemisches in der Nassphase in einer Mahlkörpermühle (2) erfolgt.

## Claims

1. Method for separating polyisoprene from vegetable raw materials, with a first pretreatment (100) of the vegetable raw materials, a mechanical processing (102) by striking, cutting and/or grinding of the vegetable raw materials following the pretreatment (100), in a wet phase, wherein the polyisoprene contained in the processed vegetable raw materials is extracted from the vegetable raw materials, and a separation (104) of the polyisoprene from the wet phase following the mechanical processing (102), **characterized in that** before or during the mechanical processing (102) in the wet phase, an adsorber material (106) is added to the grindstock mixture.

2. Method according to Claim 1, **characterized in that** in addition to the polyisoprene, other apolar value substances are also separated from the vegetable raw materials.

3. Method according to Claim 1 or 2, **characterized in that** the mechanical processing (102) takes place in a grinding-media mill (2) operated in continuous operation.

4. Method according to any of the preceding claims, **characterized in that** the surface of the adsorber material (106) on which the adsorption occurs is the surface of a solid or the surface of a liquid, and the adsorber material (106) is an apolar adsorber.

5. Method according to any of preceding Claims 3 and 4, **characterized in that** the solid and/or liquid adsorber material (106) is discharged continuously into the grinding chamber (10) of the grinding-media mill (2).

6. Method according to any of the preceding claims, **characterized in that** the separation (104) of the natural rubber and/or of the adsorber material (106) from the wet phase takes place by way of mechanical separation methods.

7. Method according to any of the preceding claims, **characterized in that** the mechanical processing (102) of the grindstock mixture takes place in the wet phase in a grinding-media mill (2).

## Revendications

1. Procédé de séparation de polyisoprène de matières premières végétales, comprenant un premier prétraitement (100) des matières premières végétales, un traitement mécanique par percussion, découpage et/ou frottement (102) des matières premières végétales suivant le prétraitement (100) dans une phase humide, lors duquel le polyisoprène contenu dans les matières premières végétales traitées est dissous à partir des matières premières végétales, et une séparation (104) du polyisoprène de la phase humide suivant le traitement mécanique (102), **caractérisée en ce qu'**un matériau adsorbant (106) est ajouté au mélange de produit broyé avant ou pendant le traitement mécanique (102) dans la phase humide.

2. Procédé selon la revendication 1, **caractérisé en ce qu'**en plus du polyisoprène, d'autres matières de valeur apolaires sont également séparées des matières premières végétales.

3. Procédé selon la revendication 1 ou 2, **caractérisé en ce que** le traitement mécanique (102) est effectué dans un broyeur à corps broyants (2) fonctionnant en continu.

4. Procédé selon l'une quelconque des revendications précédentes, **caractérisé en ce que** la surface du matériau adsorbant (106) sur laquelle l'adsorption a lieu est la surface d'un solide ou la surface d'un liquide, et le matériau adsorbant (106) est un adsorbeur apolaire.

5. Procédé selon l'une quelconque des revendications précédentes 3 ou 4, **caractérisé en ce que** le matériau adsorbant solide et/ou liquide (106) est évacué en continu dans la chambre de broyage (10) du broyeur à corps broyants (2).

6. Procédé selon l'une quelconque des revendications précédentes, **caractérisé en ce que** la séparation (104) du caoutchouc naturel et/ou du matériau adsorbant (106) de la phase humide est effectuée par des procédés de séparation mécanique.

7. Procédé selon l'une quelconque des revendications précédentes, **caractérisé en ce que** le traitement mécanique (102) du mélange de produit broyé dans la phase humide est effectué dans un broyeur à corps broyants (2).
